# EUROPEAN PATENT APPLICATION

(11) **EP 1 306 768 A1**
(43) Date of publication of application: **02.05.2003**
(21) Application number: 01309106.1
(22) Date of filing: 26.10.2001
(51) Int. Cl.: G06F 15/18, G06N 3/08

(54) **Method and system for adaptive learning and pattern recognition**

(71) Applicant: Sensoria Technology Limited, Covent Garden, London WC2E 9HF (GB)
(72) Inventor: Rimoux, Norbert, 93300 Auvervilliers (FR)
(74) Representative: Cooper, John

(57) **Abstract**

A method and system for an adaptive learning and pattern recognition that detects and learns significant patterns and pattern semantic in a noisy environment. A unique predation method of reinforcement and deletion by using stimulus and context activities is disclosed. The learning and pattern recognition of the present invention also employs the learned semantics knowledge to evaluate the semantic context of the pattern.

## Description

### CROSS-REFERENCE TO RELATED APPLICATIONS

This application claims the benefit of U.S. Provisional Application No. 60/200,803, filed May 1, 2000.

### TECHNICAL FIELD OF THE INVENTION

The present invention relates in general to learning and decision systems and more particularly to a method and system for adaptive learning and pattern recognition.

### BACKGROUND OF THE INVENTION

Several different learning and pattern recognition systems exist currently for automatically detecting and recognizing different types of patterns. These systems include neural networks and guided propagation networks ("GPNs"). The existing systems presently require large memory space to run and maintain, and have low response time. Neural network systems, e.g., require that a system be preprocessed and built with fixed weights before the network may be deployed. Moreover, the capability to recognize patterns in the known systems are limited because they typically do not include additional semantic or syntactic applications. Therefore, it is highly desirable to have an adaptive learning and pattern recognition system that overcomes the existing problems associated with the known learning systems.

### SUMMARY OF THE INVENTION

The present invention is a method of recognizing and learning patterns in an adaptive learning network. The network in the present invention may initially be empty. An input pattern made up of basic components or events in the order of occurrence in the pattern are received and searched in the network. If the cel having the basic component is found, that cel's reinforcement counter is incremented. If a cel does not exist, a new cel is created to hold the basic component. As the cels are traversed in the network, a path representing the pattern is formed.

In one embodiment, when a cel does not exist, the new cel may be created in a temporary memory. When the new cels are reinforced to a predetermined threshold, the new cels may be migrated to a main network.

In one embodiment, the present invention includes a plurality of cel structures enabled to be linked to its parent cel, cousin cel and a child cel. Each cel controls its own functions and passes the control to the next cel in the link. A cel may have an attribute type of termination or glue. A termination attribute marks an end of a segment in a pattern. A glue attribute indicates that a cel is an embedded event in a pattern. The termination cel also may include a link to a semantic network where semantic meanings or related words are stored. The semantic network further aids in identifying an input pattern.

Further features and advantages of the present invention as well as the structure and operation of various embodiments of the present invention are described in detail below with reference to the accompanying drawings. In the drawings, like reference numbers indicate identical or functionally similar elements.

### BRIEF DESCRIPTION OF THE DRAWINGS

Preferred embodiments of the present invention will now be described, by way of example only, with reference to the accompanying drawings in which:
Figure 1 is a diagram illustrating an exemplary interconnection scheme of primary lexical cels in the present invention;
Figure 2 is a diagram illustrating another exemplary interconnection scheme of primary lexical cels in the present invention;
Figure 3 illustrates a pointer scheme of a cel;
Figure 4 illustrates an exemplary object hierarchy of a cel;
Figure 5 illustrates a hypothesis propagation network;
Figure 6 illustrates an example of a virtual association network; and
Figure 7 illustrates the stimulus and context activities of the present invention.

### DETAILED DESCRIPTION OF THE INVENTION

### Terminology

Cel - Object quantifying an event; a text character, another cel, a sound, an image, or a group of cels, etc.

GPI - Guided Propagation Inference object, a container of cels which organize the cels into paths representing the chronological repartition of the cels.

Module - one or more GPIs dedicated to one task.

Propagation - the process of transmitting contextual information along a GPI path, from cel to cel. Inside of a GPI, all propagations are guided according to the current cel activities along paths, in order to restrict the topological space that is to be evaluated.

Retro-facilitation or back-facilitation - the process by which a cel can boost the activities of his parent cels belonging to the same path. This is a way for other modules to help a GPI in the internal guided propagation process.

Synchronie - the process by which the activity of a cel could be related to another near temporal event, different from its own temporal position.

Hierarchisation or hierarchization - the process by which a GPI is able to redistribute its own internal topology by isolating sub-paths, or aggregating paths.

The present invention is directed to a method and system for adaptive or dynamic learning and pattern recognition. The dynamic learning and pattern recognition system of the present invention can be used in many different applications such as search engines, speech recognition and translation, financial and weather forecasting models, and games. The present invention is based on concept of nodes, also known as cels, propagated into one or more networks. The one or more networks are referred to as a lexical net. The lexical net is created as the cels are propagated through the learning and recognition process of the present invention.

An exemplary implementation of a lexical net includes two principle types of entities: cels which quantify events, and a guided propagation inference ("GPI") object which is an organized collection of cels, quantifying relative event time.

The purpose of a GPI is to learn and recognize significant patterns that are in the formerly unknown input signals without any procedural built-in rules. An empty GPI accepts an initial signal flow entry that represents a flow of ASCII character, sound, frequencies, or any other type of signal coded under the form of a flow of numerical values, e.g., between 0-255 for an ASCII text flow for instance. Initially, only the data each described herein as an event, typically representing a finite set, e.g., 256 values for an ASCII signal flow, exist as an input signal Raw data of an external signal are primary events. Such kind of data acts as primary stimuli.

The relative event time describes the relative position of an event relative to another event. This can be seen as a relative time quantification between two events occurrences. E.g., if the signal flow is [83 85 78] coding the word "SUN" in an ASCII signal flow, the event "U" appears after event "S" and prior event "N". This is the relative time quantification of the event "U" in the context of the pattern here which is a word "SUN". Generally, events are handled at cel level and relative event times are handled at GPI level.

In one embodiment, the cels existing in the lexical net of the present invention share the same interconnecting structure.

In one embodiment, the most basic cel from which all other kinds of cels are derived contains an explicit event and three possible links. The three links include a link to a parent cel (the event prior to this one), a child cel (the event after this one), and a cousin cel (the event that could occur at the same relative event time as this one and having the same parent cel) .

In addition, a reference to an event may be indirect, e.g., through a link or a pointer to another basic cel containing an explicit event value. The linked cel may belong to the same GPI, or to another.

Typically, in one embodiment of the present invention, a cel handles several kinds of information in addition to an event. That is, a cel includes a pointer to a short term memory which links to other cels. A cel also may include a pointer to a container of links to classical procedural objects, e.g., a set of unique identifiers belonging to a traditional database. A cel also may include a pointer to a procedure or function that will be called if the cel is activated beyond a certain threshold. A cel also may include a pointer to another GPI. A cel may also include a non-typed pointer, also known as a void pointer. A cel also may include several containers of links to cels belonging to other GPI'ₛ. E.g., in the case of an ASCII flow example, syntactic structures GPI, semantic structures GPI, or other GPI handling the same or different kind of signals.

A certain cel also may implicitly handle signaling of segmentation information. E.g., the representation of the word "SUN" into a GPI implies that the cel coding the event "N" in the context of this word is a cel having a termination attribute or type. That is, a termination attribute typically marks an end of a coherent word or phrase that is recognized. A cel of this type typically codes a correlated segment of information. For instance, in the case of an ASCII signal flow, typical information segments include prefix, suffix, roots, phrases, sentences, etc.

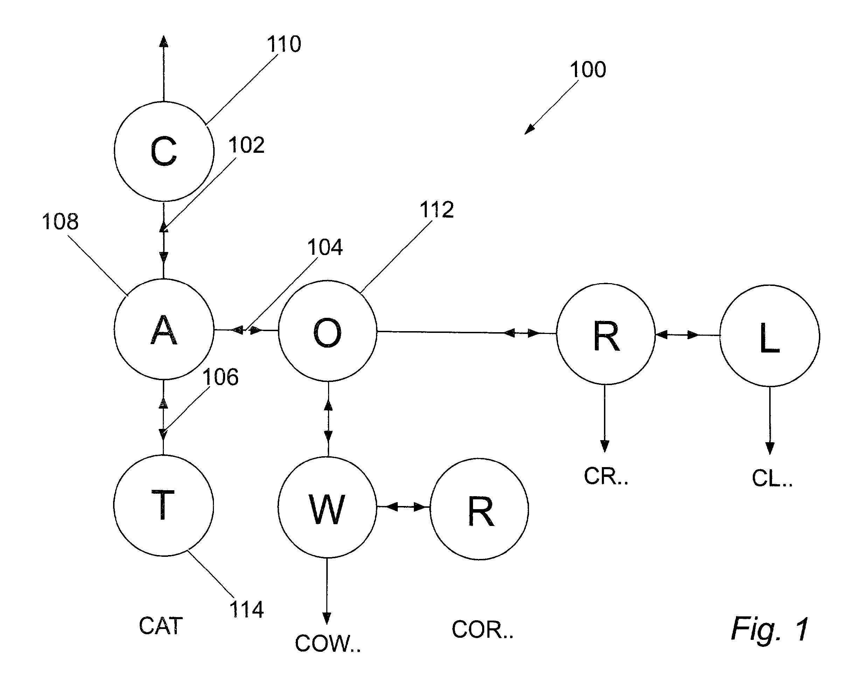

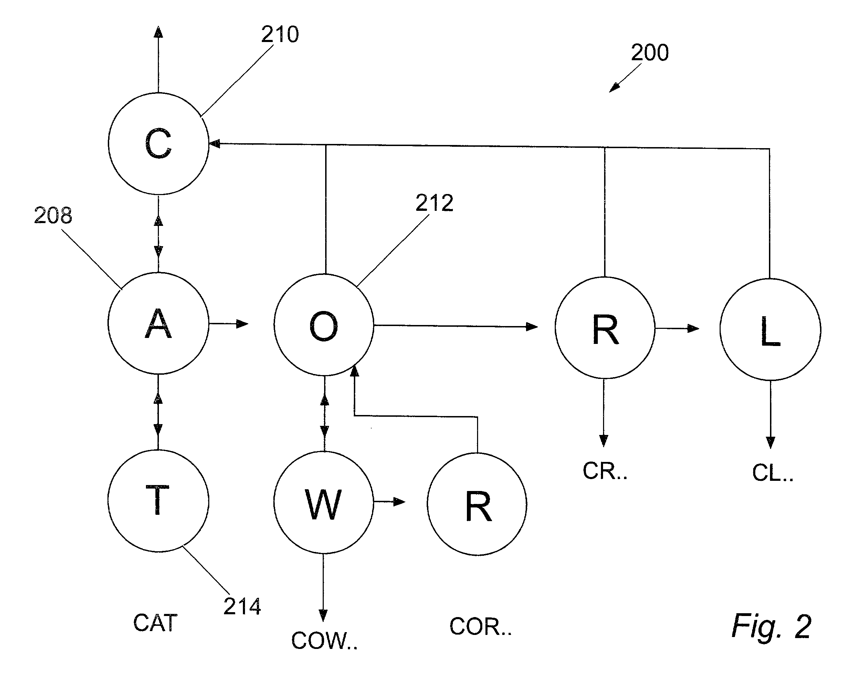

In an exemplary embodiment, the cels of the present invention are structured into a uniform and universal "three connection" cel topology, referred to as a "tricel". Figures 1 and 2 show two interconnection schemes. For example, a cel 108 may have three pointers 102, 104, 106, each pointer 102, 104, 106 defining a type of relation with another cel 110, 112, 114 respectively. A parent pointer 102 may have a link to a creator cel or a parent cel 110 depending on an implementation. A child pointer 106 may link to a next cel 114 in a context path. A third pointer, e.g., a cousin pointer 104 may point to a cousin cel. A cousin cel 112 has an equivalent time as the current positioned cel 108.

Unlike the known GPNs, the present -invention need not have effectors or detectors. Detectors are structures designed to detect a value of an incoming signal. It is linked to all the cels carrying a selected value throughout the entire net, and transmits to them the stimulus corresponding to this value in the incoming signal. Effectors are structures similar to the detectors, except that they are connected to the termination cels of the cel network, and activated by a cel if this cel is excited beyond a certain threshold. An effector stage can be connected to the detector stage of a deeper net of cels.

In the present invention, each cel is an active entity evaluating its own activity in response to an event. Also in response to an event, each cel may generate or propagate additional events. The cels in the present invention are represented by an object oriented hierarchy. Representing cels in an object oriented hierarchy optimizes the processing speed.

Also unlike the known GPNs, the present invention need not operate on an absolute internal clock. For example, some cellural networks such as GPN's rely on absolute time quantification. Typically, the time between two events is handled as a measure of the difference in time between the time two consecutive events occurred. Consequently, all further processes, particularly recognition has to be synchronized on an absolute internal clock signal. The frequency of the clock has to be in a range compatible with the kind of events that users want to detect in an incoming signal. As a result, activation of different cels in the network or propagation has to be synchronized with the incoming signal to begin a recognition process.

Advantageously, the GPI of the present invention need not handle absolute time but only the time notions of "before" and "after" and "simultaneously" among several events. Time is then handled as a variable and relative entities, clocked by "events" rather then by absolute time measures. This ensures that the learned patterns are not depending on absolute time, but on an asynchronous succession of events.

For example, if a GPI is highly stimulated, e.g., numerous events in a short period of time occur, the events are processed faster according to the event time regardless of an absolute time clock. The tricel connection scheme in the present invention implicitly codes this event time measure, i.e., "before" is implied in the parent cel, after is implied in the child cel and simultaneously is implied in the cousin cel in the present invention. There is no need to synchronize the cels on an internal absolute clock, rather an incoming event itself acts as a clock.

Accordingly, the present invention operates on an implicit or explicit relative event clock. In the present invention, propagation synchronization is handled at cel level, e.g., at an event time when the event is detected. The propagation synchronization refers to activating of related cels upon receiving an incoming signal. For example, when a cel is activated, it integrates the activity of its parent cel's context activity and the stimulus. The stimulus refers to the value of the incoming signal that occurred at the same time as the time corresponding to the cel. The newly evaluated context activity value is then transmitted to the child cel.

A cel itself may become an event for another GPI, and the secondary internal signal generates the same learning/recognition process as in the primary GPI, resulting in a synchronization of the propagation in the secondary GPI.

In an exemplary embodiment, the present invention utilizes the properties of object oriented programming to ensure the most optimal synchronization between any process regardless of their localization inside or external to GPIs. Because one cel is able to reference another cel belonging to another GPI, or generate an input event to another GPI, any processes such as learning or recognition can be distributed between several GPI's. The set of propagation in several GPI's during a recognition process needs to be coherent from a time point of view, i.e., synchronized. The cel of a given GPI (GPI 1) can initiate a new propagation inside another GPI (GPI 2). In such a case, the localization of the propagation process is external from GPI 1 and internal for GIP 2.

In the present invention, propagation decisions are evaluated and guided at a cel level. The propagation decision making process depends on each cel's contextual activity. The contextual activity of the present invention will be described in greater detail herein below. Local net topology of the GPI is another factor considered in the propagation decision making process. In one embodiment, the propagation process is fully recursive, and therefore, there is no need for micro temporal coding.

Micro temporal coding refers to a method to supersede a limitation in an absolute time quantification scheme. For example, a GPN using absolute time quantification cannot store and recognize a sub-pattern in the same GPN structure. For instance, the termination "ism" in a lexical application needs to be duplicated each time it appears in a path because absolute time encoding does not allow a GPN to operate asynchronously. To supersede this limitation, the main event clock is subdivided into a finite number of time slices, allowing the GPN to evaluate several shared sub-patterns between two main clock tops recursively. The GPI structure of the present invention is naturally asynchronous and recursive and does not need micro temporal encoding.

In the present invention, the "tricel" topology may use buffered events input. In a known GPN, propagation is made on a value-by-value input signal. At each clock top, the current value in the signal is sent to the GPN. All the cels corresponding to this time clock are evaluated. At the next clock top, the child cels of previous evaluated cels are evaluated, etc. The propagation is synchronized on the input rate of the signal events.

In a GPI of the present invention, the input signal can be buffered. Events building the signal are stored into a local memory buffer. Since the cel objects themselves are able to self evaluate in relation to the events stored in the buffer, it is no more necessary to wait for the next single signal event to continue the propagation. In the best case, i.e., 100% match between buffered input data and cels along a path, propagation occurs only along a single path from parent to child without having to evaluate the other "possible" paths. Privileging some propagation in this vertical way increases the speed of recognition. The combination of a buffered input signal allied to the "asynchronousness" and recursivity of the GPI structure authorizes every kind of propagation horizontally step by step, vertically from parent to child along a reduced number of paths or any combination in between.

For example, propagation to the child cel may be privileged. This process, referred to as "vertical propagation" provides a mechanism for a GPI to guide internal propagation, resulting in a faster prediction/recognition process.

Vertical propagation also avoids the global reset of the cel activities of a GPI, resulting in a partial, faster cel activities reset. Typically, a cel is able to store its activity, the computed result between the activity propagated from its parent cel, and the stimulus from the incoming signal event. At the end of a recognition phase, all activated cels have to be reset to 0 in order to perform another recognition phase. During a horizontal propagation, e.g., in a GPN, all cels in the net are activated and therefore, the reset process needs to access all the cels of the net.

GPI, on the other hand, is able to handle vertical propagation and does not have to evaluate every path of cels. After recognition has occurred, only a small amount of cels has been activated, typically less than 1%. Thus the reset process is minimized.

By incorporating an event clock at cel level, it also avoids cel activity resets. For example, a GPI can contain an event counter. The event counter is incremented each time an event occurs. Since the GPI handles the time information on an event basis, this counter acts as an event time clock for the cels of the GPI. If a cel contains the same structure, i.e., its own clock memorizing the GPI's event time when the cel is activated, no additional reset is needed at the time of the recognition.

For example, for an ASCII input pattern, "president pretend", when the word "president" has been recognized, the GPI's event clock is 9. When the second recognition process involving the pattern "pretend" begins, the GPI's event clock is 11. Since the cels representing the events "p", "r", "e" are shared by the two paths representing the words "president" and "pretend", their activities remain 100% due to the previous recognition phase.

**Table 1**

| Cel | Activity | Clock |
|---|---|---|
| p | 100 | 1 |
| r | 100 | 2 |
| e | 100 | 3 |

But the cel level clock as shown in Table 1 indicates that these activities were valid at event time 1, 2, 3, which are event times less than the current event time, 11. By examining the current event time with the event time indicated in the cel when the activity was modified, the cel can conclude that its present activity is due to an earlier propagation, and can self reset it to 0 for the present propagation. Thus, there is no need to proceed to an explicit reset of the overall previously activated cels.

In the present invention, cels share the "tricel" interconnection scheme which can be implemented in object oriented programming. A procedure or a method applicable to global GPI can also be implemented as an equivalent procedure at cel level in conjunction with a global propagation through the GPI. Accordingly, each cel becomes self-manageable.

For example, a GPI can be saved into a disk file, i.e., a persistent image of one or several GPI's can be made onto a disk. For a GPI to self-save into a file, it calls the root cel's save method and returns. The root cel's save method writes in a file all necessary information concerning the root cel, then calls the save methods of its child cel, cousin cel, then returns. This mechanism does not depend on the type of the object and therefore is universal for every kind of objects present in a GPI. An example of an elementary cel implemented in C++ programming language is shown below:

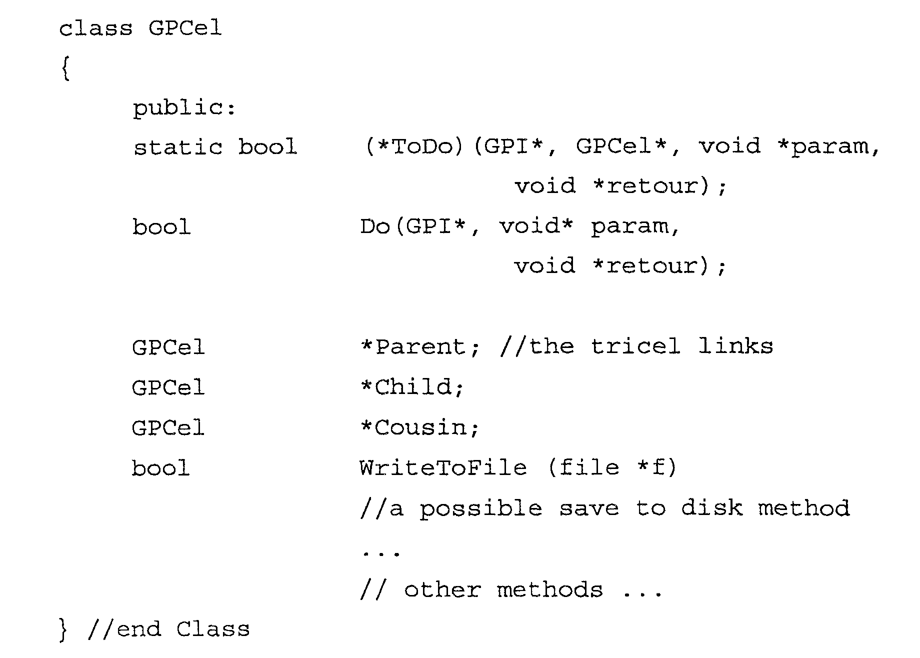

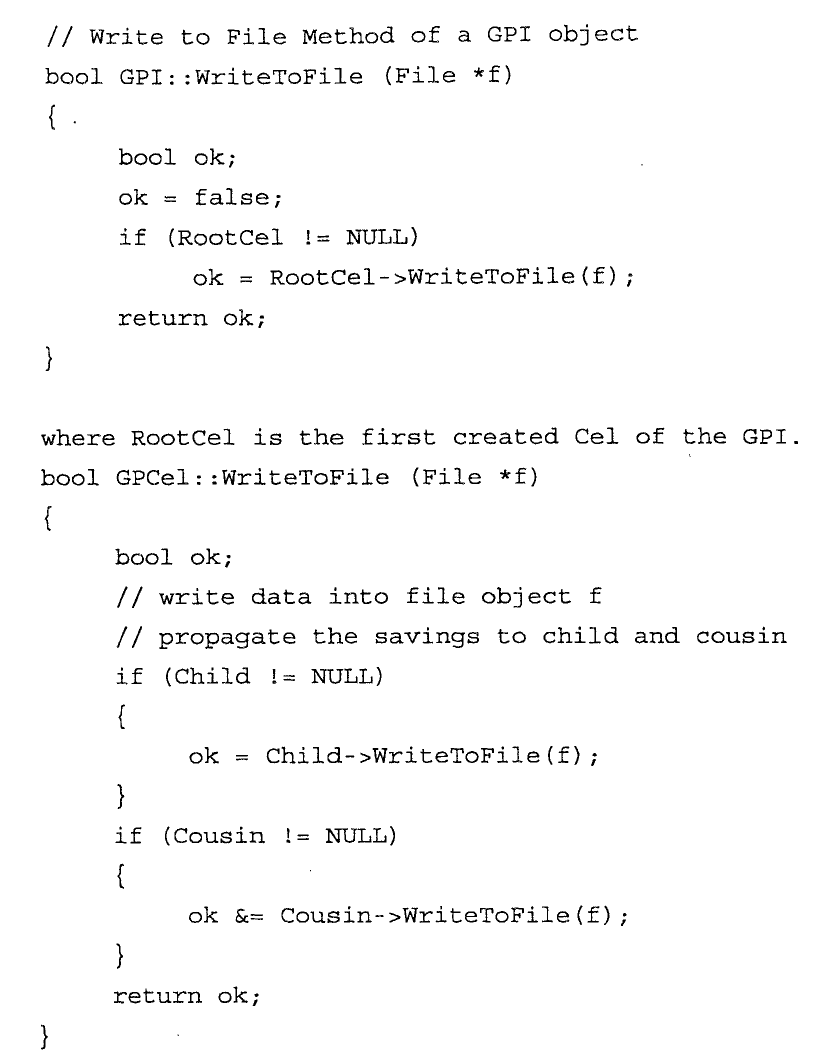

A similar mechanism is used for other methods involving propagation into the cel net of a GPI. In one embodiment, each method is implemented at both cel and GPI level and propagate in the same way.

The present invention may also be implemented in non-object oriented programming, e.g., as a standard procedure of a programming language. For example, the following lines of the GPCel class:
- static bool: (*ToDo)(GPI*, GPCel*, void *param, void *retour) ;
- bool: Do(GPI*, void* param, void *retour);
can be implemented as a standard procedure and still keep advantage of the "tricel" topology propagation logic of the present invention. For example, a sequence of commands,
GPI *g;
GPCel::ToDo = DoSomething;
RootCel->Do(g, NULL, NULL);
will execute the procedure DOSomething for every cel in a GPI, via the DO method of the GPCel Class. The routing of the execution is implicitly handled by the internal topology of the GPI, and ensures that each cel will be activated in the correct order.

An example of a procedure to execute at cel level and Do method of an elementary GPCel Class is:

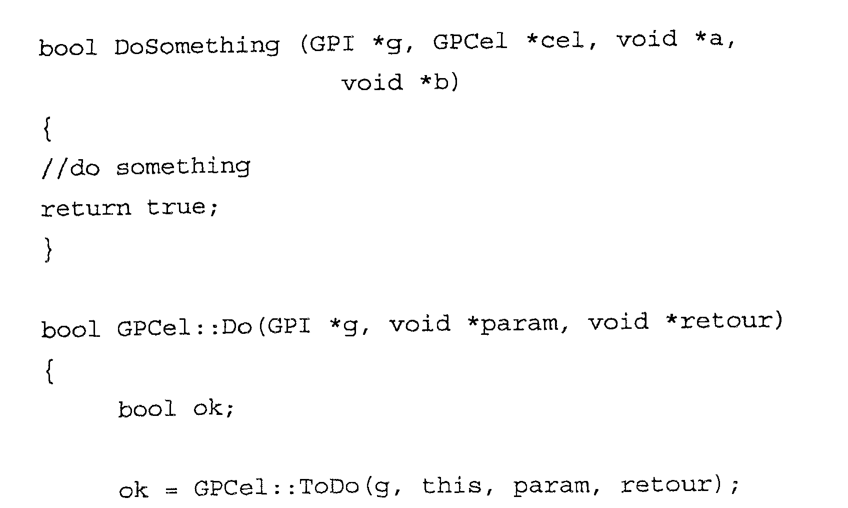

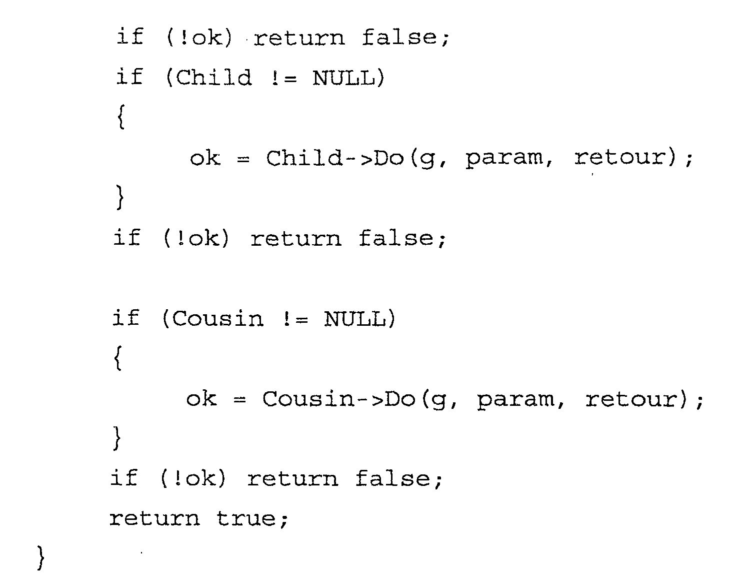

Additional features of the present invention include an indexing scheme used for learning and pattern recognition. The goal of the indexing process is to extract the keys or portion of the keys from a document or a stream of events, and to order them by relevance. The indexing scheme in an exemplary embodiment is based on lexical and semantic pattern recognition that evaluates relationships between keys in a document, and relevance indices. A standard thesaurus file format may be designed in order to form a language zone module having an initial knowledge about words and the semantics of these words.

A language zone is the minimal set of interrelated or synchronized GPI's necessary to obtain the highest recognition rate of a language data signal. For a textual language zone, a language zone may include three main categories of knowledge: shape knowledge; abstract links between shapes, i.e., semantic links between words in a textual signal; and temporal classification of the shapes in an input flow, i.e., basic syntactic links.

For example, in an input pattern "the pamel is an animal", the shape of the word "pamel" contains noise, i.e., misspelling. From examining the shape knowledge alone, it is not possible to conclude what the correct word should be. That is, "pamel" may be a misspelling of the word "panel" or the work "camel". By examining the rest of the words in the pattern, e.g., "animal", and comparing it to the semantic links of both "panel" and "camel", it becomes apparent that the camel is the more likely candidate.

The present invention builds its semantic links from the input patterns. For example, from input patterns such as "this man is great", "this man is tall", a semantic link "tall" and "great" for the word "man" can be built. As described above, the semantic links can be used to clear ambiguities between words in a pattern by recognizing the words in its context. A language zone of the present invention also incorporates phonetic knowledge and voice shape knowledge to build an overall recognition device able to handle language recognition by both voice and text.

The present invention may include more than one GPI. For example, an exclusion GPI may be associated with the main lexical GPI, both part of the language zone module. An exclusion GPI, e.g., includes shapes or words that are to be filtered from any further incoming signal. For example, a lexical GPI can be prevented from learning or recognizing key words or patterns such as "war", "murder" related to violence.

Submitting such words to the exclusion GPI will void any of these shapes or words to be stored and recognized in the main lexical GPI. Further, since the exclusion GPI is part of several GPI synchronized together, it can also self-learn all other keys related to the shape of an excluded key, e.g., the meaning of it in the semantic links, the basic syntactic class and any other knowledge involved in a language zone.

In one embodiment, a first step in textual indexing is to identify the keys composing the text. This identifying step may be performed by the main lexical GPI and the exclusion GPI by recognizing lexical patterns in the text. Unrecognized patterns may temporarily be learned until they are discriminated, e.g., as noise, misspelling, or new word. This discrimination process is performed by path reinforcement in conjunction with semantic association or prediction, using the global semantic knowledge.

Reinforcement involves all sets of GPI's in a language zone. For example, if a lexical GPI recognizes the key "love" in an incoming signal, it will activate the cel representing "love" in its semantic link GPI. Further, other cels linked by the semantic link will be activated and reinforced. The reinforcement in the present invention may be implemented as a simple counter. It not only measures the frequency of the occurrence of a pattern or word in the language, but also its generality from a semantic point of view.

In addition to the lexical pattern recognition process, the local semantic of the text is learned through "lexical co-occurrence" detection and semantic association. In one embodiment of the present invention, building a new kind of knowledge, e.g., a semantic link knowledge through a primary shape GPI involves structure inherent to the GPI architecture referred to as a short term associative memory ("STAM"). The primary GPI handles directly the input signal, e.g., a textual flow. When one of its cels is activated, e.g., signaling a pattern recognition, it is considered as an event.

Since a cel of a GPI can be uniquely identified by a numerical value, e.g., its memory address or a unique ID number, the succession of events of this type generated by the primary GPI results in a flow of numerical values. This flow of numerical values form a new kind of signal that can be submitted to a new GPI that will recognize and/or learn new patterns, i.e., new knowledge. Once an event of recognition occurs, each event forms a flow of words, instead of characters. Relationships between these words are used to build the semantic link knowledge.

In one embodiment, each cel of the primary GPI, i.e., the main lexical GPI in textual signal analysis, stores the secondary signal in its short term associative memory ("STAM") prior to building a real semantic link GPI. In one embodiment, the STAM has three main properties: it stores a weighted link to events; it makes the events compete with one another; and it associates them when the weights reach their maximum value.

The following example illustrates building of a semantic link in one embodiment of the present invention. Suppose a signal flow "war gulf desert storm" is input to a main lexical GPI. Also suppose that "war" is described by cel number 103 in the GPI, "gulf" is described by cel number 143 in the GPI, "desert" is described by cel number 112 in the GPI, and "storm" is described by cel number 187 in the GPI. According to this input, the new generated signal is: 103 143 112 187. Semantic stack of cel 103 will store new links with an initial activity, typically 1. The same process occurs for the other cels, resulting in semantic stacks containing:

| Cel | Link | Activity |
|---|---|---|
| 103 | 143 | 1 |
| | 112 | 1 |
| | 187 | 1 |
| 143 | 112 | 1 |
| | 187 | 1 |
| 112 | 187 | 1 |
| 187 | void | |

Suppose a second signal "war gulf marines" is input to a main lexical GPI. Also suppose that "marines" is described by cel number 200 in the GPI. The new generated signal for this second signal then is: 103 143 200. Since cel 103 is presently linked to cel 143, cel 143 occurred twice in the neighborhood of cel 103. Such events are known as co-occurrence between two words.

A link to cel 143 competes with links having the same activity, here links 112 and 187 by inhibiting their activities, typically by a value of one. The link to cel 143 is stimulated, also typically by a value of one. Accordingly, cel 103's semantic stack will contain:

| Cel | Link | Activity |
|---|---|---|
| 103 | 143 | 2 |
| | 112 | 0 |
| | 187 | 0 |

Since activities of links to cel 112 and 187 are 0, these links are destroyed, and cel 103's semantic stack becomes:

| Cel | Link | Activity |
|---|---|---|
| 103 | 143 | 2 |

This process is applied each time recognition occurs in the main lexical GPI. The STAM acts as a short term memory since a link can be quickly destroyed or forgotten if another co-occurrence does not take place in a near future in terms of event time.

After several recognition processes, the state of cel 103's semantic stack may become:

| Cel | Link | Activity |
|---|---|---|
| 103 | 84 | 100 |
| | 113 | 94 |
| | 72 | 88 |

where cel 84 represents "nato", cel 113 represents "war", and cel 72 represents "europe". When the activity of link to cel 84 has reached the maximum activity value, e.g., 100, the STAM of cel 103 associates or dispatches cel 84 to cels 113 and 72.

That is, event 84 is sent to the STAMs of cels 113 and 72. These STAMs then adds a link to cel 84 or reinforces a previous pre-existing link. Each time link 84 of STAM 103 is associated to another STAM, it loses activity, typically 1. The state of cel 103's semantic stack may become:

| Cel | Link | Activity |
|---|---|---|
| 103 | 84 | 98 |
| | 113 | 94 |
| | 72 | 88 |

The STAM has acted as an associative memory. The size of the STAM can be constrained to a maximum value to make link selection much or less sharp. With a low value the STAM tends to destroy low reinforced links in a very short term. With a high or "infinite" value, the STAM tends to retain low reinforced links during a longer period of "event" time before destroying them. When an event is submitted to a STAM, and if this STAM has reached its maximum capacity, the lower activated links are destroyed in order to handle the new event. This local semantic contributes to the global semantic process.

The differences between local and global semantics are learned by the global semantic GPI. During an indexing process, two types of semantic knowledge may be used: the general global semantic knowledge which represent the long term semantic memory, and a short term semantic memory built upon the text to be indexed. The evaluation of the semantic activity of a key, e.g., a word, is a computed mean value between the global semantic activity, and the semantic local to the indexed document.

Suppose several articles have been submitted to a main lexical GPI of a language zone that includes a semantic link GPI. A global semantics and keyword have been memorized or learned, resulting in an interaction of all the documents that have been indexed. Both semantic links and word shapes build a global textual knowledge which acts as a long term textual memory. Generally, the locally detected semantic links or a network stored in the short term semantic memory include a subset of the links or a network stored in the main long term semantic GPI. This common subset is reinforced in the global semantic GPI. As new input is processed, new links may be established in a short term semantic memory. If the new links are properly reinforced in this local and temporal semantic GPI, they may be migrated to the global long term persistent semantic GPI. This migration process may, for example, signify a learned relationship.

In one embodiment, a habitual long term/short term memory scheme is used during learning process in the GPIs. In indexation applications, however, the segmentation of the flow of events may be naturally made by the submission of a document or an input stream. When indexation of the input is finished, the short term semantic memory may be released. When the learning process is initiated by the submission of a new document or input stream occurrence, a global propagation is initiated in both the long and short term memories. Initiating the global propagation establishes the semantic activities of the keys or words of the text, or the events in the input stream, in both the long and short term memories. This activity may be the relevance key in the context of the document. The short term semantic memory, then, may be released. Generally, indexation is a normal learning process, e.g., lexical and semantic, at document level with an intermediate phase comprising the evaluation of the relevance of a word in the context of the document.

A global semantic propagation is then issued by each cel having a key, e.g., a word or an event in an input stream, in the key flow of the input stream. Each cel issues a propagation in the main lexical net at the level of the cel with which it is semantically related, resulting in a facilitation or inhibition of the corresponding lexical path. When all the keys in the input stream have been processed, the present activity of the cels represent the level of their semantic activity. The cels representing keys are ordered by activity, and the resulting list will be normalized at 100% on the best key. The indexation algorithm not only measures the lexical frequency of a key, but also its semantic frequency, both locally in the context of the article, and globally in the context of the global language zone.

When a cel of the main lexical GPI has been activated, i.e., the corresponding word has been recognized, the cel is reinforced. The reinforcement counter which may be equivalent to a frequency counter is also incremented, typically by 1. When only one GPI, e.g., a main lexical GPI, is involved in the signal analysis, the reinforcement counter represents a measure of the frequency of a pattern or key in a set of documents.

Since every GPI synchronized with the main lexical GPI is able to activate a given key of it, its reinforcement counter which is equivalent to a frequency counter is also incremented.

Even when the semantic link GPI is implemented as a set of STAM, a cel sees its semantic frequency incremented each time it is added to a STAM as a semantic link.

The present invention also may include virtual associative nets. Virtual associative nets ("VAN") are an extension of the standard GPI. Their purpose is to detect possible association in a given GPI by correlating the topology of its different paths. The GPI is responsible for recognizing, learning and maintaining spatial-temporal events. The VAN is responsible for finding related subsets of paths in a GPI, and detecting new kinds of events that could result in the creation of a new GPI dedicated to these new types of events.

The VAN, in one embodiment, is dynamic and virtual in the relative GPI event timescale. The GPI typically does not interact with the VAN. VAN may interact with GPI by initiating GPI events, e.g., events input, retro-facilitation/inhibition, learning, topological reordering, etc. After a VAN has interacted with GPI, it may be released or destroyed. A persistent form of VAN is a new GPI.

Since a GPI event may modify the topology of the GPI, a VAN exists between two GPI events. Each time a signal or a flow of events for a GPI is submitted to a GPI, either a primary signal (e.g., a text flow or a sound flow) or a secondary internal signal such as the one generated by a main lexical GPI to its synchronized semantic link GPI, the state of the GPI changes since reinforcement can occur and/or new path can be added. Its topology, i.e., the repartition of its cels and paths of cels, changes. Since a VAN is built according to a particular state of a GPI, it is only valid while this state remains unchanged. For instance, a VAN is created after a lexical GPI has learned a new key, e.g., KEY #1. If a second new key is learned, e.g., KEY #2, the topology of the GPI changes and the VAN which was created according to a former topology of the GPI is no longer assured to be valid. The VAN exists in a valid state between the time the two GPI events, "KEY #1 learned" and "KEY #2 learned".

As an example, main lexical GPI may handle a stream of events represented by ASCII values of characters. As the events are processed, the GPI correlates, learns, stores, and recognizes one or more patterns of these events. The patterns of events in turn may represent words and phrases, etc. By examining the topology of the lexical GPI, the pathways representing phrases show a possible correlation between paths representing words. For example, if the lexical GPI learned "Bill Clinton" and "Bill Gates" the topology of the lexical GPI may show that the paths leading to words "Clinton" and "Gates" are correlated through the path "Bill". As these kinds of correlation are often reinforced, it means that a stream of words is not chaotic.

For example, if the flow of words conforms to a relatively stable associative logic and is not appearing randomly, the flow of words is said to be not chaotic because the GPI may have detected a reinforced correlation between patterns of events. Therefore, it is said to be not chaotic. Because of possible frequent correlation inside the event flow, it may be a great benefit to handle this type of event. In this particular example, GPI detects that the event flow of type «word» is not chaotic, and creates a new GPI dedicated to the learning and memorizing of the pattern for «word». This may be the semantic links GPI. Thus, a new GPI involved in handling events flow of type "word flow" may be created. The new GPI may then detect semantic links between words.

Another example of a VAN is illustrated herein. A STAM detects and learns the following semantic links attached to a key "NETWORK" from, e.g., indexing newspaper articles. The result is:

| | |
|---|---|
| PHONE | 97 |
| MOBILE | 90 |
| INTERNET | 75 |
| BT | 74 |
| LINK | 73 |
| WEBSITE | 69 |
| E-MAIL | 68 |
| ORANGE | 65 |
| RADIO | 59 |
| SPECIALISTS | 59 |

A VAN applied to these links examines the topology of the semantic links and tries to associate them. In such a case, examining the topology is equivalent to navigating through these semantic links. For example, a cel described by the link "INTERNET" is linked to cels representing "NET", "SITE", "WEB", "COMPUTER", "E-MAIL", etc. Each of these cels is also semantically linked to other cels. As a result, the VAN is able to organize the cels of this STAM in a collection of linked cels representing a path, in this example a semantic context. Three following paths may be built from the indexation described above:
"PHONE" "MOBILE" "BT" "ORANGE" "SPECIALISTS";
"INTERNET" "LINK" "WEBSITE" "E-MAIL" "SPECIALISTS";
"RADIO".
"PHONE" is linked to "MOBILE" which is semantically linked to "BT", etc. "PHONE", "INTERNET", and "RADIO" are not semantically linked, i.e., cel "PHONE" does not appear in the STAM of "INTERNET" and "MOBILE" and vice-versa.

The VAN applied to the STAM of cel "NETWORK" has detected 3 paths. Since this is a GPI topology, the VAN can be transformed in a GPI before being destroyed, or generate a semantic link signal to a pre-existing semantic link GPI. In addition, paths "PHONE" and "INTERNET" share a common cel "SPECIALISTS". From a signal point of view, the two sets "PHONE" ... "ORANGE", and "INTERNET" ... "E-MAIL" can be considered as cousin cels in the context of the cel "SPECIALISTS". The VAN can the generate new signals to a semantic link GPI under the shape of a flow of cel identifiers of "PHONE" "MOBILE" "BT" "ORANGE" "INTERNET" "LINK" "WEBSITE" "E-MAIL", reinforcing previously detected links, and creating new links by association. These new links are reinforced by co-occurrences or association or they may be destroyed during future recognition/learning phases.

The semantic links related to a key or lexical path may be referred to as "first degree" semantic space of that key. A VAN, by examining the topology of the semantic links related to a key is able to detect the relationship between these links. This process results in the grouping of the semantic links in one or several independent semantic contexts, e.g., second degree semantic space. The VAN is able to associate and generate new semantics paths, e.g., by grouping together former detected semantic links. Since the signal is based on event from the semantic link GPI or its STAM implementation, a first-degree signal device, the VAN may be considered as building a second-degree semantic link space. VAN established semantic links are not necessarily present in the text flow initially submitted to the main lexical GPI.

For example, in the semantic GPI, the key "Bill" is related to "president gates windows democrat c++ politics business clinton." The VAN may detect the two separate semantic contexts "gates windows c++ business" and "president democrat politics clinton." The VAN is also able to identify new associations and to generate a learning event in the first degree semantic GPI. The use of a VAN in a semantic link GPI permits to guide the propagation by "disambiguing", or clarifying the semantic context and facilitating the keys belonging to one or several semantic contexts while inhibiting the others. Also, new semantic associations not detectable by the semantic GPI may be learned by using the VAN. The VAN also helps to accelerate the process of learning new semantic links in a semantic GPI, by reinforcing the known links. As described hereinabove, the present invention operates on the basic principle of guided propagation network ("GPN"), modifying the GPN to include new and novel features to the known GPN principle. This novel adaptive learning and pattern prediction/recognition method and system will now be described with reference to the Figures.

Figure 1 is a diagram illustrating an exemplary interconnection scheme of primary lexical cels in the present invention. The interconnection of the cels forms a network representing interrelationships among the cels. This network is referred to as a GPI. Two principal types of entities are involved in one embodiment of the lexical net: cels 110,...,114 that quantify events, and GPI 100 which is an organized collection of cels, quantifying relative event time. Events may include an incoming character, for example. Figure 2 is a diagram illustrating an alternative interconnection scheme of the primary lexical cels. In the scheme shown in Figure 2, the cousin cels 108, 112 are linked in one direction.

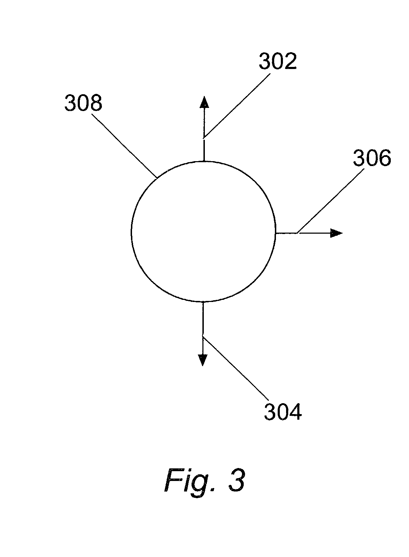

As shown by Figures 1 and 2, the cels generally share a similar interconnection structure among each other. In an exemplary embodiment, shown in Figure 3, each cel or node has a maximum of three pointers to other cels. Having only three pointers reduces ambiguities in the network. The first is a pointer to a parent cel ("parent pointer") 302, the second is a pointer to a child cel ("child pointer") 304, and third is a pointer to a cousin cel ("cousin pointer") 306. A child cel represents the next cel in a context path. A cousin cel represents an equivalent time positioned cel. Thus, three pointers may be considered as representing a temporal arrangement of events. For example, the contents of the parent cel represent the event that occurred at time, t-1. The contents of the child cel represent the event that occurs at t+1. The contents of the cousin cel represent the event at time t, i.e., the equivalent time the event when the instant cel 308 occurred. Referring to Figure 1, event "A" 108 occurs at time t, event "C" 110 occurs at time t-1, and event "T" 114 occurs at time t+1 to form a word "CAT". Similarly, event "O" 112 occurs at time t, and event "W" 114 occurs at time t+1. The events "A" 108 and "O" 112 are cousin cels and have equivalent event time position in the GPI 100.

Each cel is an active entity which evaluates its own activity in response to an event, and is able to generate any kind of event by itself. The present invention does not need to operate on an absolute internal clock, but can operate relative to an implicit or explicit event clock.

The lexical network shown as an example in the Figures 1-7 illustrates the GPI used for a word recognition system and method, however, it should be understood that the method and the system of the present invention is also applicable to other types of pattern recognition.

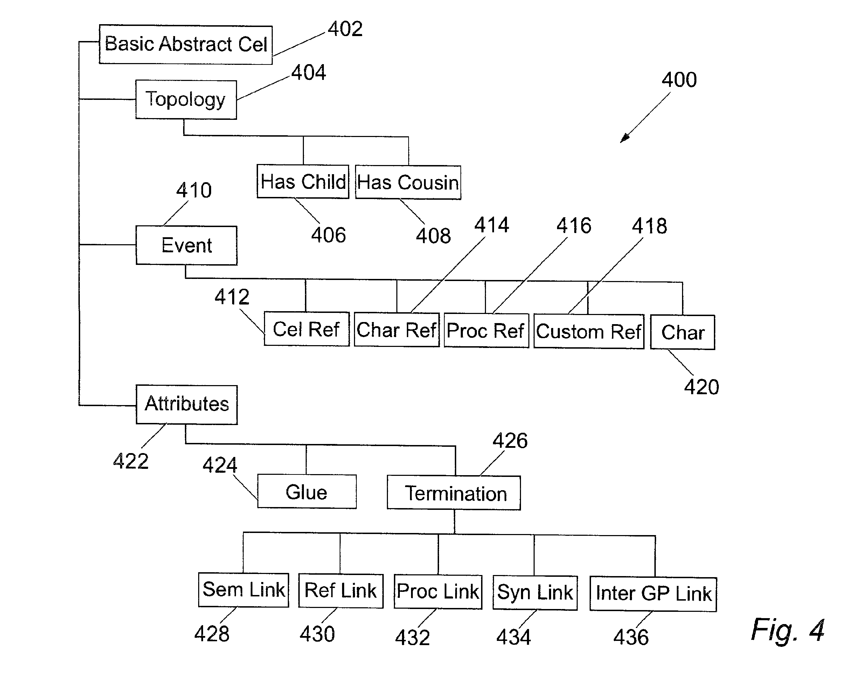

Figure 4 illustrates an example of an object data structure hierarchy of a cel. In one embodiment, each cel structure is an object derived from a basic abstract cel and includes the following structure. The topology 404 represents or describes interconnections of this cel to other cels in a network, i.e., a GPI. For example, "has child" 406 field describes that this cel has a pointer to a child, i.e., there is a path from this cel to another cel. A null pointer in the "has child" 406 field indicates that the cel does not have any child cels. Similarly, "has cousin" 408 field includes a pointer to its cousin cel.

An event 410 structure describes the type of event the cel is storing. The types of event may include a "cel ref" 412. The "cel ref" 412 is a pointer to a cel which in turn points to another cel and thereby forming a flow or stream of words ending with a pointer to a terminating character. Other types of events include a "proc ref" 414. The "proc ref" 414 is a pointer to an external procedure or a function that may be launched when an event occurs or when the cel is excited or stimulated. A "char ref" is a reference to a character code in the GPI. For example, "char ref" refers to the value of an elementary event contained in the data stream that is the signal input. Since a textual signal is an important special case of signal analysis in the GPI applications, cels storing a single ASCII value (0-255) in an 8 bit format is defined in the general cel object architecture shown in Figure 4. This minimizes memory needs.

This element of signal coded with 8 bits is named "char" if the value is directly stored in the cel or "char ref" is the cel stores an 8 bit index to a 256 entry table containing the possible values. "Char ref" is also referred to as indirect addressing. With non-ASCII coded language such as Unicode encoded texts, the events of the incoming signal are stored in wider properties of a cel object, typically 16 bit, 32 bit, or 64 bit integers.

In an example illustrated in Figure 1, the GPI cels have ASCII character as their content and therefore, the char structure under the event structure has an ASCII code. Other structures may include "custom ref" 418 which may be utilized for customizing an event, and "char" 420 which is an 8 bit attribute for a cel belonging to a lexical GPI.

The attributes 422 structure in the object hierarchy describes whether the cel is a glue cel or a termination cel and includes a glue 424 field and a termination 426 field. A termination cel typically signifies an end of a segment, e.g., a word or a character. A glue cel is a cel which is not a termination cel. For example, in an input stream of events making up a word, all characters except the last character in the word may be designated as glue cels. Thus, referring back to Figure 1, the characters "C", "A", "O" may be designated as glue cels. "T" and "W" may be designated as termination cels.

The termination field additionally includes other structures such as sem link 428, ref link 430, proc link 432, syn link 434 and inter GP link 436. The sem link 428 may be a pointer to a semantic network cel which may contain a semantic meaning for the word terminating in the cel. Ref link 430 may be a reference to another container having, for example, a reference to an article or a publication that is related to this word terminating in the cel. Proc link 432 may have a pointer to an external function that may be executed in relation to this word or event. An example of an external function is a stored procedure. Syn link 434 may be a link to a syntactic net, i.e., another GPI which helps to distinguish this word terminating in the cel from other words. Inter GP link 436 may have a general link between two GPIs, e.g., a URL, or a grouping of two values.

An inter GP link is a pointer to a distant remote GPI, or to one cel of this distant GPI. Typically, an application using GPI technology of the present invention implements the communication layers such as TCP/IP sockets, PIX sockets, etc, to a distant GPI object descriptor. In this way, two remote GPI's can be synchronized as if they were sharing a common process memory. The "tricel" links of a GPI cel can be implemented as remote links, instead of memory pointers, to distribute the knowledge between several distant GPI's. This is referred to as the knowledge distribution. The propagation logic of GPI remains the same, a child or cousin cel being local or remote.

Inter GP links can also be used between GPI's, but not at cel level. For example, a given GPI (#1) may reroute a signal to a distant GPI (#2). GPI #1 and GPI #2 independently begin a propagation initiated by the signal or stimulus, to perform a recognition process. At the end of both propagation, GPI #1 which is the caller consolidates its own recognition results with that from GPI #2. This is referred to as the knowledge repartition. Several GPI zones may thus be involved in the same kind of knowledge working concurrently. However, the GPI's need not be synchronized, e.g., propagations inside one GPI is independent from propagation in the other.

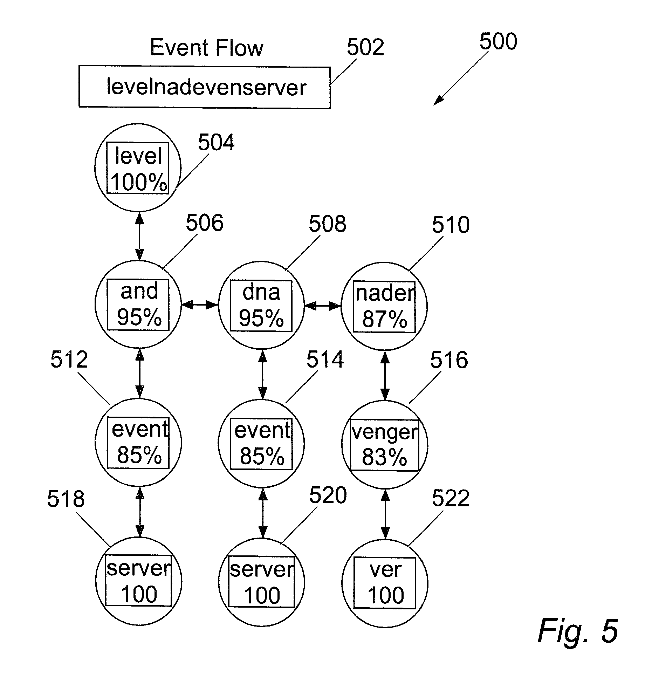

Figure 5 is a hypothesis propagation net 500 illustrating how GPI in the present invention is able to drive another network. The network shown in Figure 5 is a segmentation network which segments an input phrase into the best segments of words according to the present state of the knowledge in cooperation with the lexical net. In this example, the input stream or the event flow comprises "levelnadevenserver" 502. This input may represent a number of phrases. For example, the phrase may be "level and event server" with "and" misspelled as "nad" and a "t" missing after the word "even" and no spaces between the words. The phrase may also represent a number of other words. The lexical net of the present invention is enabled to determine the most likely intended meaning of the phrase or alternatively present to a user a number of choices for the user to verify.

For example, when the event flow "levelnadevenserver" 502 is submitted to the lexical net (e.g., shown at Figure 1 and 2) as an input, the lexical net compares the contents of its cels for the first word in the event flow. The lexical net returns the word "level" with 100% value as shown at 504 because it was able to match the word "level" along the lexical network of cel path. Next, the rest of the event flow "nadevenserver" is submitted to the lexical net for the next word. The lexical net returns three possible words, "and" 506 with 95% confidence value because the word nad did not exactly match the word "and", "dna" 508 also with 95% confidence value, and the word "nader" 510 with 87% confidence value. The confidence values here are not 100% because the lexical network could not find an exact match for the word "nad" with any of the cel path in the network. The lexical network, however, returns a number of possibilities for what may be a likely word with a confidence level or value. The remaining event flow is then submitted to the lexical net. Depending on the path selected, the remaining event flow may contain different contents. For example, along the "and" 506 and "dna" 508 path, the remaining event flow is "evenserver". Along the "nader" 510 path, the remaining event flow is "venserver". When the event flow "evenserver" is passed to the lexical net for word segmentation, the lexical net may return "event" 512, 514 with 85%, then "server" 518, 520 with 100%. When the event flow "venserver" is passed to the lexical net for word segmentation, the lexical net may return "venger" 516 with 83%, then "ver" 522 with 100%.

In this example, ambiguities exist because there are three possible choices for the phrase "levelnadevenserver". The ambiguity may be resolved by, for example, further examining a semantic net that is linked to a terminating cel for any one of these words. The examination is enabled by having the sem link structure (428 Figure 4) in the object hierarchy shown in Figure 4. Another way to resolve the ambiguity is by executing an external function pointed to by the proc link (434 Figure 4) of a terminating cel for any one of these words. The proc link (434 Figure 4), for example, may point to an external function which when executed, may display all three choices to the user via a user interface, so that the user may resolve the ambiguity or provide additional helpful inputs.

Initially, the GPI of the present invention, for example, a lexical net as shown in Figure 1, may be empty. Thus, unlike any other previously known pattern recognition methods, the present invention need not have a structure of relationships built initially. As new patterns or words are passed to the lexical net, the net builds and propagates new cels and learns the relationship among the cels. Each time the same path of cels is learned or recognized, the cels in that path are reinforced. When a path of cel occurs sparsely, e.g., a misspelled word, and does not occur again, that path is forgotten. The process of reinforcing paths that occur frequently while forgetting those that occur infrequently is referred to as cel predation. Thus, through cel predation, the lexical net learns and recognizes patterns and is enabled to discriminate between real patterns and noisy patterns.

As described herein above, initially, the lexical net may only include a header. When a word is passed into the net, for example, "CAT", the lexical net reads the first character "C" and since it does not find a cel having "C" value, creates or propagates a first cel having ASCII value "C" in its char structure. The data structure such as the one shown in Figure 4 is initialized with appropriate values for the first cel. The control is then passed to the "C" cel. At the "C" cel, the next letter "A" in the work "CAT" is scanned and searched in the network for an "A" cel that follows (or child of) the "C" cel. For example, the "has child" 406 link shown in Figure 4 may be examined to determine whether an "A" cel follows the "C" cel. In this case, since the "C" cel is not linked to any other cel, the "C" cel creates an "A" cel and passes control to the "A" cel. The "A" cel then creates the "T" cel the same way the "C" cel created the "A" cel. When the "T" cel is created, it is designated as a termination cel because it is the last cel in the segment or pattern of word "CAT". At this junction, the data structure pointer belonging to the termination cel may be set to point to various structures.

As described with reference to Figure 4, a termination cel may include several pointers to data structures. In one embodiment, a single pointer to a non-typed data structure is implemented to access any kind of structure a GPI application designer needs, typically a pointer of kind "void *" in C or C++. "void *" pointer can be casted to whatever type of structure an application using GPI's may need. For example, in a database index implementation or text indexation/retrieval application of the GPI of the present invention, the RefLink can point to a list of database unique identifiers.

As the word "CAT" occurs more frequently, the lexical net learns that these three events, C-A-T, are related to form a word "CAT". The learning is accomplished through reinforcement of occurrences of this pattern of events. On the other hand, the words or pattern of events that do not occur often are forgotten via the lack of reinforcement, and eventually deleted from the network. For example, a path "CTE" may have been created as a result of a one time input erroneously spelling the word "CAT". If this path is not entered again, no reinforcement occurs for the path C-T-E. As a result, this path will have a very small or negative reinforcement value. By examining the reinforcement values of the cels in a path, the lexical net of the present invention is able to recognize the most likely patterns for a given input event flow. Additionally, other paths that do not have enough reinforcement may be forgotten, i.e., released or destroyed.

The cel path predation process is a novel principle in the present invention by which a GPI is able to select correct cels or paths by "forgetting" the others. Generally, each cel or path has a reinforcement counter. When one cel or path is reinforced, prior to incrementing its internal reinforcement counter, it decrements all the reinforcement counter of all other cels/paths that have the same reinforcement activity. For example, a cel behaves like a predator just before being reinforced. When reinforcement activity of a cel or a path reaches below a certain threshold, e.g., a zero value, the cel is forgotten, i.e., released or destroyed. The combination of reinforcement and predation is the general method in which a GPI selects plausible patterns, and throws away noise in the input event flow.

As another example, if a path of cels C-A-T exists and an event flow "CET" is entered, as each cel is mapped to the path, the "C" cel will be reinforced, for example, by incrementing a reinforcement factor or activity by one, or any other predetermined number. Since the next cel in the path and the event flow, i.e., A and E, do no match, the "A" cel will not be reinforced. The next cel "T" however, matches with the next character in the event flow, therefore, cel "T" will also be reinforced, by for example incrementing its reinforcement factor activity by one. In the present invention, the reinforcement factor or activity is normalized to be a manageable value.

When a next segment or event flow "COW" is passed to the lexical net, the first character "C" is recognized in the existing "C" cel, and therefore, "C" cel is reinforced and control is passed to the "A" cel. The "A" cel then examines itself to determine whether it is an "O" cel. Since it is not, it creates or propagates a cousin cel. Thus, a cel having an "O" ASCII value is created as a cousin cel to the "A" cel. Control is passed to the "O" cel which in turn propagates a "W" cel after examining that no "W" child cel exists. The "W" cel again is designated as a termination cel and necessary assignments are made to its data structure. For each event flow or pattern of words that is passed to the lexical net, the lexical net creates or propagates events as described herein above.

To reduce the size of the lexical net, as the propagation grows, certain suffixes or prefixes occurring frequently may be stored in one location and the terminating cel may point to that location. For example, in the English language, suffix "ism" appears in many words such as "mechanism". For cel paths comprising this word, cels M-E-C-H-A-N may be propagated with N pointing to the location in memory where "ism" is stored. This method insures that not too many propagation of cels I, S, M occur in the network.

In one embodiment of the present invention, the pattern recognition process traverses the paths in the lexical net to determine patterns with a sufficient level of relevance. Thus, for example, if the input events "CAT" is to be recognized, the lexical net may recognize the word "CAT" with 100% confidence. However, if the input events "CTE" is entered, the lexical net of the present invention may recognize that this word is really meant to mean "CAT". Thus, the lexical net may return "CAT" as a recognized pattern with, e.g., 90% confidence.

To recognize the patterns of events, the present invention implements in one embodiment an activity level for each cel. The recognition process is performed by using the novel cel stimulus and context activity values. The cel stimulus activity value describes the activity of the cel in relation to the event in the signal that appears at the same event time as the cel in its belonging path. The cel context activity value describes the activity inherited from its parent cel which belong to the same path. The parent cel's activity is a mean value between its own stimulus and context activity.

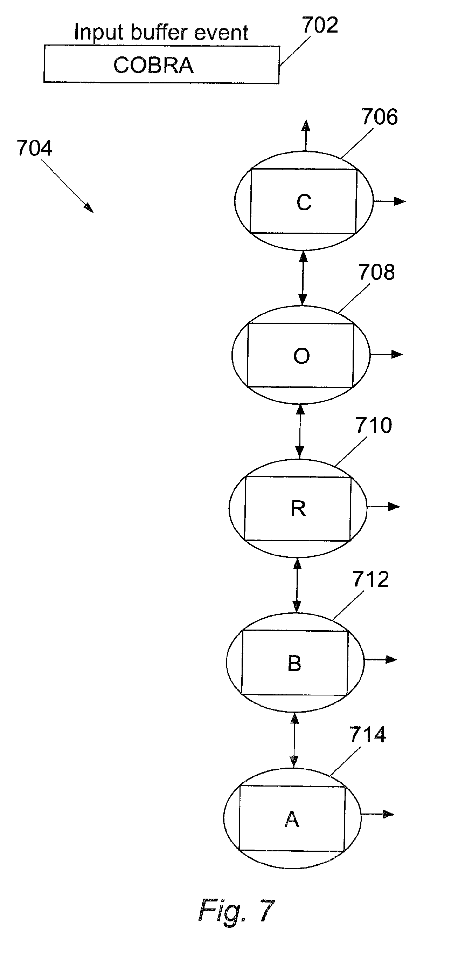

Figure 7 illustrates an example of context and stimulus activities of the present invention during a recognition process. The input event buffer 702 illustrated is the word pattern "COBRA". An example of a path in a lexical GPI may include five cels linked to form the word "CORBA" 704, as shown. Cel "C" 706 of the path CORBA 704 receives the propagation signal from the root cel of the lexical GPI with a value of 100%. The root cel may be considered as t=0 event in the event time scale. Cel "C" 706 which is a t=1 event, compares its contents with the t=1 event of the event input buffer. In this example, the input event at t=1 is also "C". Accordingly, the stimulus activity of cel "C" is determined to be 100%. Cel "C" 706 invokes the propagation method of cel "O" with the context activity of (100%+100%)/2=100%.

Cel "O" 708 whose event time is "C" event time + 1, tests itself with the t=2 event of the event input buffer 702 which is also "O". Therefore, the stimulus activity of cel "O" 708 is determined to be 100%. Cel "O" 708 invokes the propagation method of cel "R" 710 with a context activity of (100%+100%)/2=100%. The context activity is typically computed as: (context activity of a parent cel + stimulus activity of a current cel) / 2.

Cel "R" 710 tests itself with event t=3. Here, no match occurs because the input buffer 702 at event t=3 is "B". Cel "R" 710 then tests itself with event in the input buffer event 702 which occurred prior to and after the t=3 event, i.e., t=2 and t=4. A match occurs because the input buffer 702 at event t=4 is "R". In this case, however, the stimulus activity is determined to be under the maximum activity because stimulus activity is decreasing with event time. Generally, the decreasing function named synchronie can be any kind of a curve, but typically in a lexical GPI, it is defined as:
stimulus activity = max-15*abs(delta t) for abs(delta t)<=3;
stimulus activity = 0 for abs(delta t)>3;
where,
max=100, delta t=relative cel time-matching event time, and abs is absolute value.

Therefore, the stimulus activity for cel "R" in this example is computed to be 85%. Cel "R" 710 then invokes the propagation method of cel "B" 712 with a context activity of (100%+85%)/2 = 92.5%.

Similarly, cel "B" 712 invokes the propagation method of cel "A" 714 with a context activity of (92.5%+85%)/2=88.75% by using the synchronie function described above. Cel "A" 714 tests itself with event t=5. A match occurs here with the "A" in the input buffer 702. The stimulus activity, therefore, is determined to be 100%. The context activity of cel "A", i.e., the termination of the path "CORBA" is determined to be (88.75%+100%)/2=94.375% with this set of parameters. Thus, the path "CORBA" has been recognized with an activity (relevance) of 94% through evaluation of both context and stimulus excitation. In the present invention the event flow may be buffered, so that the entire flow may be examined at any given cel.

As described above, the present invention may also include a semantic network which is a network of cels having semantic contents. For example, the termination cel "T" in the path "CAT" shown in Figures 1 and 2 may have a semantic link to semantic network's cel which points to a termination cel of a path "FELINE".

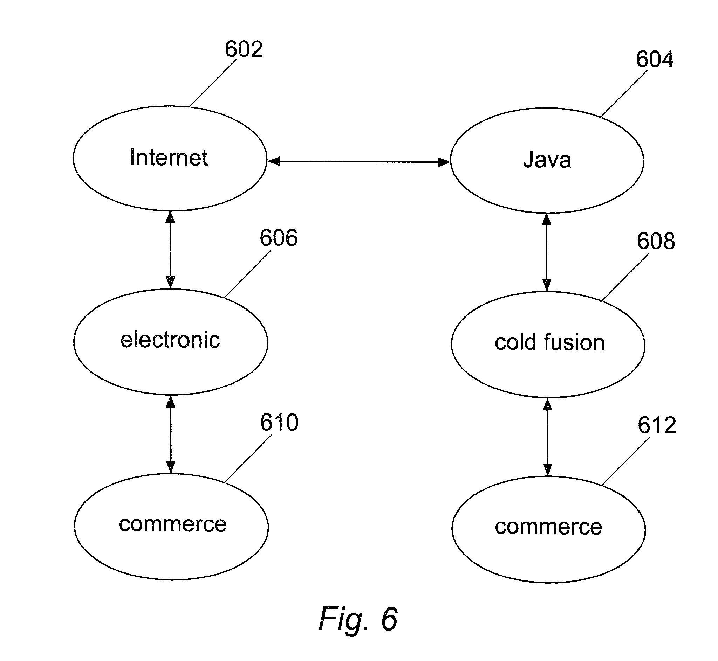

The present invention also may include a virtual association network. The virtual association network examines topological information of one network, for example, a cousin relationship in a lexical network to determine associations among words, e.g., synonyms of an event flow. The virtual association network is a dynamic network that may be built to determine word associations in a local vicinity of lexical network path representing the input event flow. Figure 6 illustrates an example of a virtual association network in the present invention. For example, if a cousin relationship exists between the "Internet" cel 602 and "Java" cel 604, and "Internet" cel 602 has "electronic" cel 606 which is a parent of a "commerce" cel 610, and "Java" cel 604 has a "cold fusion" cel 608 as child cel which in turn is a parent of a "commerce" cel 612, by examining the topology that two cousin cels have the same terminating cel, i.e., "commerce" cels 610, 612, the virtual association network determines that "electronic" and "cold fusion" are closely related or may be synonyms to one another.

The present invention through it dynamic propagation method may learn and recognize patterns. The present invention also is enabled to discriminate between noises and real patterns through its unique reinforcement and predation methods. The present invention is also able to build associations among related words by utilizing its dynamic virtual association methods.

5 While the invention has been particularly shown and described with respect to a preferred embodiment thereof, it will be understood by those skilled in the art that the foregoing and other changes in form and details may be made therein without departing from the spirit and scope of the invention.

## Claims

1. A method of recognizing and learning patterns in an adaptive learning network, comprising:
receiving an input pattern made up of one or more basic components, the one or more basic components measured in event time corresponding to an order of occurrence of the one or more basic components in the input pattern;
searching in an adaptive learning network for a cel structure having a basic component of the one or more basic components starting in the order of occurrence in the input pattern;
positively reinforcing the cel structure having the basic component;
creating one or more cel structures to hold the one or more basic components and linking the created one or more cel structures to the adaptive learning network according to its event time, if not found.

2. The method of claim 1, wherein the step of receiving includes buffering the input pattern.

3. The method of claim 1, wherein the method further includes negatively reinforcing one or more cel structures that have the same event time in the adaptive learning network as the positively reinforced cel structure.

4. The method of claim 3, wherein the method further include deleting the negatively reinforced one or more cel structures when the one or more cel structures have been negatively reinforced to a predetermined threshold.

5. The method of claim 1, wherein the step of creating includes creating one or more cel structures to hold the one or more basic components and linking the created one or more cel structures to a short term associated memory according to its event time, if not found.

6. The method of claim 5, wherein the method further includes migrating the short term associated memory into the adaptive learning network when the one or more cel structures in the short term associated memory have been positively reinforced to a predetermined threshold.

7. The method of claim 5, wherein the method further includes creating a semantic network linked to the one or more cel structures in the adaptive learning network, the semantic network including one or more terms that are semantically related to the linked one or more cel structures.

8. The method of claim 7, wherein the method further includes
searching the semantic network to further evaluate the input pattern in a semantic context.

9. The method of claim 5, wherein the method further includes migrating one or more cel structures in the short term associate memory to the adaptive learning network when the one or more cel structures in the short term associated memory have been positively reinforced to a predetermined threshold.

10. An adaptive learning and pattern recognition system, comprising:
a plurality of cel structures, each of the plurality of cel structures enabled to link to any one or combination of a parent cel structure, a cousin cel structure, and a child cel structure, wherein a parent cel structure contains an event in a pattern that occurred at event time t-1, the cousin cel structure contains an event in a pattern that occurred at even time t, and the child cel structure contains an event in a pattern that occurred at event time t+1;
each of the plurality of cel structures enabled to positively reinforce itself when an input event matches its content, each of the plurality of cel structures enabled to create a cousin cel when an input event does not match its content,
wherein the plurality of cel structures are interrelated with one another in a chronological order of occurrence of events in a pattern forming one or more paths representing one or more patterns.

11. The system as claimed in claim 10, wherein each of the plurality of cel structures further has one of termination attribute and glue attribute; and a cel structure with termination attribute further has a link to a semantic network.

12. The system as claimed in claim 10, wherein each of the plurality of cel structures further includes:
a stimulus activity representing an activity of a cel in relation to the event in the signal that appears at the same event time as the cel in its path; and
a context activity representing a mean value of the stimulus activity and a context activity inherited from its parent cel in the same path.

13. The system as claimed in claim 12, wherein a degree of recognition is determined by a context activity computed for a cel structure with termination attribute in a path.

14. The system as claimed in claim 10, wherein the cel structure with termination attribute further includes a reference to a procedure for further identifying a pattern.

15. A program storage device readable by machine, tangibly embodying a program of instructions executable by the machine to perform method steps of recognizing and learning patterns in an adaptive learning network, comprising:
receiving an input pattern made up of one or more basic components, the one or more basic components measured in event time corresponding to an order of occurrence of the one or more basic components in the input pattern;
searching an adaptive learning network for a cel structure having a basic component of the one or more basic components starting in the order of occurrence in the input pattern;
positively reinforcing the cel structure having the basic component;
creating one or more cel structures to hold the one or more basic components and linking the created one or more cel structures to the adaptive learning network according to its event time, if not found.
